# EUROPÄISCHE PATENTSCHRIFT

(11) **EP 1 374 000 B1**
(45) Veröffentlichungstag und Bekanntmachung des Hinweises auf die Patenterteilung: **31.08.2005**
(21) Anmeldenummer: 02718191.6
(22) Anmeldetag: 13.03.2002
(51) Int. Cl.: G05B 23/02, G05B 15/02

(54) **VERFAHREN UND ANORDNUNG ZUR BEDIENUNG UND/ODER BEOBACHTUNG DER EINE ANLAGEN-STEUERUNG UBERWACHENDEN EINRICHTUNG**
METHOD AND ASSEMBLY FOR OPERATING AND/OR OBSERVING THE DEVICE THAT MONITORS INSTALLATION CONTROL
PROCEDE ET DISPOSITIF DE COMMANDE ET/OU DE SURVEILLANCE D'UN DISPOSITIF SURVEILLANT LA COMMANDE D'UNE INSTALLATION

(30) Priorität: 19.03.2001 US 812205; 23.04.2001 DE 10119990; 18.05.2001 DE 10124350
(43) Veröffentlichungstag der Anmeldung: 02.01.2004
(73) Patentinhaber: SIEMENS AKTIENGESELLSCHAFT, 80333 München (DE)
(72) Erfinder: BIEBER, Jürgen, 76275 Ettlingen (DE)
(86) Internationale Anmeldenummer: PCT/EP2002/002811
(87) Internationale Veröffentlichungsnummer: WO 2002/075466

(56) Entgegenhaltungen:
- EP-A- 0 429 056
- WO-A-99/67690
- US-A- 5 920 479

## Beschreibung

Die Erfindung richtet sich auf ein Verfahren und eine Anordnung zur Bedienung und/oder Beobachtung einer Einrichtung zur Überwachung wenigstens eines mit einer Anlage gekoppelten Steuergerätes von/an wenigstens einem abgesetzten, mit der Überwachungseinrichtung kommunizierenden Bediengerät.

Mit dem Voranschreiten der Leistungsfähigkeit verfügbarer Rechengeräte werden für diese im Bereich der Anlagensteuerung und -überwachung ständig neue Anwendungsmöglichkeiten eröffnet, und deshalb werden in zunehmendem Umfang Überwachungsaufgaben an Automatisierungsgeräte delegiert. Wurden daher anfänglich im Bereich der industriellen Fertigung nur vereinzelte Anlagenteile automatisiert, so können bei moderneren Anlagen nahezu alle Teile in ein Automatisierungskonzept eingebunden werden. Dabei sind zwar zumeist einzelnen Anlagenkomplexen getrennte Steuerungsgeräte zugewiesen; diese können jedoch zur Verbesserung der Effizienz untereinander Informationen austauschen, um bspw. bei Problemen in einem Anlagenteil frühzeitig die Produktion der zugelieferten Teile zu drosseln od. dgl. Dieser Informationsaustausch kann entweder direkt oder mittels einer übergeordneten Kommunikationseinrichtung erfolgen, die bspw. außerdem eine zentrale Überwachungsmöglichkeit darstellt, von der aus die unterschiedlichsten Informationen über die verschiedenen Anlagenteile abgefragt und ggf. auch beeinflußt werden können. Andererseits sind bei großen, räumlich verteilten Anlagen bei den unterschiedlichsten Maschinen oder sonstigen Funktionseinheiten Bediengeräte vor Ort erforderlich, um bspw. kurzfristig Parameter verändern zu können oder nach Behebung eines lokalen Fehlers die betreffende Maschine manuell wieder hochfahren zu können. Man ist daher dazu übergegangen, die Überwachungs- und Bedienstruktur derartiger Anlagen nach einem Server-Client-Prinzip zu gestalten, wobei ein oder mehrere Server-Rechner die gewünschten Parameterkorrekturen in Befehle für die betreffenden, vor Ort installierten Steuergeräte umsetzen und an diese verschicken, während die Client-Rechner jeweils ein Programm enthalten, das die Bedienoberfläche einer Mensch-Maschine-Schnittstelle steuert und verwaltet und zu diesem Zweck die an dem betreffenden Client-Rechner bspw. über eine Tastatur eingegebenen Befehle und Informationen interpretiert. Sodann werden von diesem Programm bspw. von einer Bedienperson angeforderte Informationen über den Zustand eines Anlagenteils über den angeschlossenen Server-Rechner ggf. von dem betreffenden Steuergerät besorgt, aufbereitet und visuell dargestellt, um der Bedienperson bspw. eine Informationsgrundlage für die Entscheidung über zu ändernde Prozeßparameter od. dgl. zur Verfügung zu stellen. Wird daraufhin eine Parameteränderung angeordnet, so wird dieser Wunsch bspw. in die Information "zu ändernder Parameter" und "neuer Wert" aufgetrennt und solchermaßen als Anweisung an den Server-Rechner übertragen, der diesen Befehl in eine für das betreffende Steuergerät verständliche Zeichensequenz umsetzt und an das ausgewählte Steuergerät sendet. Da bei dieser Vorgehensweise der Server-Rechner keine Information über die verschiedenen Rechenschritte der Client-Rechner erhält, ist bspw. ein parallelgeschalteter Betrieb von mehreren Client-Rechnern nicht möglich, da die aktuellen Bedienoberflächen der verschiedenen Client-Rechner nicht miteinander gekoppelt werden können. Es ist daher einer Bedienperson nicht ermöglicht, bspw. bei einer Inbetriebnahme aus räumlichen Gründen kurzfristig zwischen zwei Bediengeräten zu wechseln bzw. solchenfalls muss an dem neuen Bediengerät zunächst durch verschiedene Tastenkombinationen die betreffende Bedienoberfläche eingestellt werden, was bei komplexen Überwachungsanlagen aufgrund der vielfältigen Auswahlkriterien, um einen bestimmten Anlagenteil anzusteuern, relativ umständlich ist. Ein weiterer Nachteil dieser Anordnung liegt darin, dass die verschiedenen Client-Rechner mit einem umfangreichen Programm betrieben werden müssen, das auch eine Vielzahl von Informationen über die konkrete Anlage und deren Steuerungskonzept enthalten muss. Es ist daher bei jeder Änderung der Anlagen- und/oder Steuerungsstruktur erforderlich, neben der Software der Steuergeräte und des Überwachungs-Server-Rechners auch die Software der Überwachungs-Client-Rechner auf den neuesten Stand zu bringen. Hierbei handelt es sich um eine zeitraubende Tätigkeit, die sich insbesondere bei Inbetriebnahmephasen, während der immer wieder Änderungen der Regelungsstrukturen erforderlich sind, als äußerst lästig erwiesen haben.

Aus US 5,920,479 ist eine Methode und ein System zur Erstellung eines Programms bekannt mittels dessen eine technische Vorrichtung bzw. ein Apparat unabhängig von ihrer Schnittstelle gesteuert werden kann.

Die Aufgabe der Erfindung besteht darin, die Struktur gattungsgemäßer Überwachungsanlagen mit wenigstens einem Überwachungs-Server-Rechner und vorzugsweise mehreren, angeschlossenen Überwachungs-Client-Rechnern derart zu verbessern, dass einerseits die Möglichkeit besteht, von einer Bedienperson die individuell und aktuell eingestellte Bedienoberfläche von einem Überwachungs-Client-Rechner zu einem anderen mit geringstem Aufwand "mitnehmen" zu können, und wobei auch im Fall einer Änderung der Anlagen- und/oder Steuerungsstruktur die Bedienoberflächen auf den Überwachungs-Client-Rechnern hinsichtlich der anzeigbaren Strukturen, Informationen und/oder der ausführbaren Bedienhandlungen mit einem geringstmöglichen Aufwand angepaßt d. h. aktualisiert werden können.

Die Lösung dieses Problems gelingt dadurch, dass im Rahmen der Überwachungseinrichtung oder eines an diese angeschlossenen Rechners ein zusätzlicher Funktionsblock vorgesehen, insbesondere in Form eines zusätzlichen Programms abgespeichert ist, der sich nach Art eines Schnittstellenbausteins in die Kommunikation zwischen der Überwachungseinrichtung und den angeschlossenen Bediengeräten einschaltet und die an ein an geschlossenes Bediengerät gerichteten Informationen auswertet und derart aufbereitet, dass die sodann weitergeleiteten Informationen von dem betreffenden Bediengerät nach Art eines Terminals direkt angezeigt werden können.

Durch diese Maßnahme wird die Bedienoberfläche der angeschlossenen Überwachungs-Client-Rechner nicht mehr lokal gesteuert, sondern von einem in dem Server-Rechner oder einem direkt an diesen angeschlossenen Gerät installierten Schnittstellenbaustein über das Netz. Dadurch ist die Information über den aktuellen Zustand der Bedienoberflächen aller aktiven Client-Rechner zu dem Server-Rechner hin verlagert, und daher kann die an einem Bediengerät momentan aktuell eingestellte Bedienoberfläche auf Anforderung der Bedienperson sofort auf ein anderes Bediengerät übertragen werden. Da außerdem die für den Aufbau der Bedienoberflächen erforderlichen Informationen über die Anlagen- und/oder Steuerungsstruktur vorzugsweise ebenfalls zu dem erfindungsgemäßen, in dem Bereich des Servers installierten Schnittstellenbaustein verlagert sind, ist bei einer Änderung eben dieser Strukturen nur eine Änderung des erfindungsgemäßen Schnittstellenbausteins oder der von diesem verwendeten Daten erforderlich, was in einem Zuge mit der Änderung des eigentlichen Überwachungsfunktionsblockes an dem betreffenden Server-Rechner geschehen kann. Dadurch werden die vorzunehmenden Installationsarbeiten bei einer Veränderung der Anlagen- und/oder Steuerungsstruktur erheblich reduziert. Gleichzeitig werden die von einem Client-Rechner vorzunehmenden Aktivitäten auf ein Minimum reduziert, nämlich auf die Weiterleitung von Informationen von dem übergeordneten Server-Rechner an einen Bildschirm einerseits sowie der von einer Bedienperson eingegebenen Informationen an den Server-Rechner andererseits. Da hierbei von dem Client-Rechner getrennte Ein-/Ausgabe-Bausteine verwendet werden wie Bildschirme, Tastatur, Maus, sind die von dem eigentlichen Client-Rechner vorzunehmenden Aktionen derart einfach, dass es keine Schwierigkeiten bereitet, das hierzu noch erforderliche Minimal-Programm im Rahmen der unterschiedlichsten Betriebssysteme ausführbar zu gestalten. Aus diesem Grund und auch wegen der reduzierten Anforderungen an die Hardware der Client-Rechner hat ein Anwender die Möglichkeit, für diesen Zweck auf günstige Angebote zurückgreifen zu können; außerdem ist nicht zu befürchten, dass derartige Client-Rechner der in der Computerbranche üblichen, schnellen Veralterung unterliegen, denn die komplexeren Berechnungsaufgaben werden ausschließlich in dem Server-Rechner vorgenommen.

Es hat sich als günstig erwiesen, dass der zusätzliche Funktionsblock die von einem Bediengerät auszuführenden Funktionen, insbesondere Rechenschritte, zumindest teilweise übernimmt. Diese Verlagerung der Rechenaktivität beinhaltet insbesondere auch eine Verlagerung von Information von dem Client-Rechner zu dem Server-Rechner, und aufgrund der solchermaßen in verstärktem Umfang zentral zusammengefaßten Information ist es einerseits leichter möglich, entsprechende Bedienungsinformationen von einem angeschlossenen Client-Rechner zu einem anderen, angeschlossenen Client-Rechner überzukoppeln, und außerdem ist eine zentrale Zugriffsmöglichkeit auf die gesamte Information des Überwachungsnetzes ermöglicht, wodurch Modifikationen dieser Information erheblich erleichtert werden.

Es liegt im Rahmen der Erfindung, dass ein als Schnittstellen-Funktionsblock verwendeter, zusätzlicher Programmteil zur Ausführung zumindest teilweise in den Arbeitsspeicher der Überwachungseinrichtung oder des betreffenden, an diese angeschlossenen Rechners geladen wird. Da üblicherweise auch ein zur Überwachung eingesetzter Server-Rechner über einen angeschlossenen Bildschirm sowie eine Tastatur verfügt, ist ein "Minimalbetrieb" der Überwachungsanlage auch dann möglich, wenn sämtliche Client-Rechner abgeschalten sind. In diesem Falle ist der erfindungsgemäße Funktionsblock nicht erforderlich, da der eigentliche Überwachungs-Funktionsblock an dem Server-Rechner selbst und damit auf direktem Weg bedient werden kann. Sofern der zusätzliche Funktionsblock als Programmteil konzipiert ist, kann er solchenfalls zur Verbesserung der Leistungseigenschaften des Server-Rechners aus dessen Arbeitsspeicher entfernt werden; er muss jedoch wieder geladen werden, sobald wenigstens ein Client-Rechner in Kommunikationsverbindung mit dem Server-Rechner tritt.

Weitere Vorzüge ergeben sich dadurch, dass der zusätzliche Funktionsblock, insbesondere Programmteil mehrfach, insbesondere von unterschiedlichen Bediengeräten ansprechbar ist und solchenfalls die dem betreffenden Bediengerät zugeordneten, individuellen Berechnungen ausführt und Rechenergebnisse in dem betreffenden Bediengerät eindeutig zuordenbarer Weise abspeichert. Obwohl der erfindungsgemäße Schnittstellen-Funktionsblock mehrere, angeschlossene Client-Rechner bedienen kann, ist er dennoch in der Lage, eine strikte Auftrennung der Kommunikation mit den verschiedenen Client-Rechnern vorzunehmen, so dass verschiedene Bedienpersonen gleichzeitig an verschiedenen Client-Bedienstationen völlig unabhängig voneinander programmieren können. Dadurch kann bspw. das Reparaturpersonal an dem einer Maschine zugeordneten Bediengerät dieselbe testen bzw. nach Behebung des Fehlers wieder in Betrieb nehmen, während an einem anderen Bediengerät in einem anderen Anlagenbereich bspw. andere Maschinenparameter korrigiert werden können od. dgl.

Es hat sich bewährt, dass der zusätzliche Funktionsblock, insbesondere Programmteil, verschiedene, angeschlossene Bediengeräte individuell ansteuert. Auch diese Maßnahme dient der Entkopplung der an verschiedenen Bediengeräten vorgenommenen Programmierschritte, so dass sich trotz der Informationshäufung in dem Server-Rechner das bisherige Verhalten voneinander unabhängiger Client-Rechner simulieren lässt und simultane Eingaben möglich sind.

Indem der zusätzliche Programmteil von der Überwachungslogik oder dem Überwachungsprogramm der Überwachungseinrichtung mit unterschiedlichen Parametern, insbesondere Geräteadressen, ansprechbar ist, können die zugeordneten Bediengeräte individuell angesteuert werden. Solchenfalls ist eine eindeutige, bidirektionale Kommunikation zwischen einem Bediengerät und einem Steuergerät möglich, ohne dass dabei von den anderen Bediengeräten bzw. Client-Rechnern nicht angeforderte Informationen an diese übertragen würden. Eine ähnliche Funktion kann jedoch auch von dem erfindungsgemäßen Schnittstellenbaustein übernommen werden, indem dieser von einem Steuergerät eintreffende Informationen mit den von den verschiedenen Bediengeräten angeforderten Informationen vergleicht und eine Weiterübertragung dieser Informationen nur vornimmt, wenn eine Korrelation zwischen angeforderter und eintreffender Information besteht.

Es hat sich bewährt, dass die Kommunikation zwischen dem zusätzlichen Schnittstellen-Funktionsblock und dem Überwachungs-Funktionsblock der Überwachungseinrichtung auf einem Kanal zusammengefaßt ist. Als Übertragungskanal kann hierbei ein Speicherbereich angesehen werden, der bspw. nach dem FIFO-Prinzip von dem Schnittstellen-Funktionsblock beschrieben und von dem Überwachungs-Funktionsblock gelesen wird, ggf. zusammen mit einem weiteren Speicherbereich für die entgegengesetzt gerichtete Information. Die gezielte Weiterleitung der Informationen an das betreffende Steuergerät bzw. an den aktuell zugeordneten Client-Rechner kann bspw. anhand von mit übertragenen Kennziffern od. dgl. vorgenommen werden.

Ferner kann der zusätzliche Schnittstellen-Funktionsblock mehrere Kanäle zur Kommunikation mit mehreren Überwachungs-Funktionsblöcken und/oder Überwachungseinrichtungen aufweisen. Im Stand der Technik existieren eine Vielzahl von Steuergeräten der unterschiedlichsten Hersteller sowie jeweils zugeordnete Überwachungs-Funktionsblöcke, die solchenfalls auf unterschiedlichen Überwachungs-Server-Rechnern oder auch auf ein und demselben Überwachungs-Server-Rechner geladen und ausgeführt werden können. In einem solchen Fall kann der erfindungsgemäße Schnittstellen-Funktionsblock eine entsprechende Anzahl von Kanälen aufweisen, um eine Kommunikation sämtlicher Bediengeräte mit sämtlichen Funktionsblöcken zu ermöglichen. Bspw. können derartige Übertragungskanäle als jeweils zwei FIFO-Speicherblöcke für antiparallele Informationsflußrichtungen ausgebildet sein.

Mit großem Vorteil wird der zusätzliche Schnittstellen-Funktionsblock bei downlinkseitiger Kommunikation (von der Überwachungseinrichtung zu einem Bediengerät) als Verteiler, insbesondere Demultiplexer betrieben. Dies bedeutet, es werden die von einem oder mehreren Überwachungs-Funktionsblöcken eintreffenden Informationen nur an das jeweils interessierte Bediengerät weitergeleitet, so dass die ggf. auf demselben Kanal von einer Überwachungs-Funktionsbaugruppe eintreffenden Daten auf jeweils einem ausgewählten Ausgangskanal zu einem Client-Rechner weitergeleitet werden.

Bei uplinkseitiger Kommunikation (von einem Bediengerät zu der Überwachungseinrichtung) kann der zusätzliche Schnittstellen-Funktionsblock als Signalzusammenführungsbaustein, bspw. nach Art einer ODER-Verkopplung, insbesondere jedoch als Multiplexer, betrieben werden. Hier müssen die an denselben Überwachungs-Funktionsblock gerichteten Befehle und Informationen der unterschiedlichsten Client-Rechner auf einem Kanal zusammengefaßt werden. Sofern den betreffenden Informationen bspw. von dem erfindungsgemäßen Schnittstellen-Funktionsblock eine von dem im Überwachungs-Funktionsblock erkennbare Kennziffer zugefügt wird, so lässt sich durch Verwendung der selben Kennziffer bei der Antwort seitens des U-berwachungs-Funktionsblockes unschwer eine 1:1-Zuordnung zu dem betreffenden Bediengerät herstellen, so dass Eingaben von unterschiedlichen Client-Rechnern nahezu simultan bearbeitet werden können.

Bevorzugt läuft die uplinkseitige Kommunikation prioritätsgesteuert ab. Durch diese Maßnahme können Konflikte bspw. bei konkurrierenden Zugriffen auf dieselben Maschinenparameter vermieden werden. Dabei können auch simultane und prioritätsgesteuerte Zugriffe miteinander verschränkt sein, bspw., indem die über eine Anlage verteilten Uberwachungs-Client-Rechner jeweils einzelnen Anlagenbereichen zugeordnet werden und innerhalb eines derartigen Anlagenbereiches prioritätsgesteuert nur jeweils ein einziger Client-Rechner aktiv sein kann, während jedoch im Verhältnis zu anderen Anlagenteilen, wo überwiegend oder ausschließlich andere Maschinenparameter modifiziert werden, ein simultaner Betrieb mehrerer Client-Rechner möglich ist (, die jeweils im Rahmen ihres Anlagenbereichs Priorität genießen).

Eine vorteilhafte Anordnung lässt sich dadurch finden, dass bei Prioritätsvergabe an ein Bediengerät von einem anderen Bediengerät eingehende Informationen unterdrückt oder in einen dem betreffenden Bediengerät zugeordneten oder zuordenbaren Zwischenspeicher umgeleitet werden. Hierbei kann unterschieden werden, ob es sich bei den eingehenden Informationen um Anfragen handelt, und solchenfalls kann trotz anderweitiger Prioritätsvergabe die gewünschte Information beschafft und weitergeleitet werden, während andererseits Anweisungen zur Veränderung von Parametern evtl. unterdrückt oder zumindest verzögert werden, um gegenseitige Beeinflussungen mit anderen Bedienpersonen auszuschließen.

Die Erfindung lässt sich dadurch ergänzen, dass alle angeschlossenen Bediengeräte sowie ggf. diesen zugeordnete Speicherbereiche, insbesondere für die Zwischenablage eingehender Informationen, von dem zusätzlichen Funktionsblock verwaltet werden. In diesem Zusammenhang soll unter dem Begriff "Verwaltung" die Anlage und Pflege eines jedem als Client-Rechner ausgebildeten Bediengerät zugeordneten Verwaltungsdatensatzes mit aktuellen Informationen über die betreffende Hardware bspw. die Größe des Bildschirmspeichers od. dgl., und/oder dem momentanen Zustand der Bedienoberfläche, bspw. angezeigte Maske, Position eines Cursors, etc., verstanden werden. Ferner können hierunter auch Startadressen von Speicherbereichen verstanden werden, an denen von dem betreffenden Client-Rechner eingehende Informationen zwischengespeichert werden oder auszugebende Informationen abgelegt werden, bspw. auch die Adressen von Hardware-Schnittstellenbaugruppen und/oder die in einem Netzwerk verwendeten Ansprechadressen für den betreffenden Client-Rechner.

Ein weiteres, erfindungsgemäßes Merkmal liegt darin, dass die erstmalige Anmeldung eines Bediengerätes bei einem als Schnittstellen-Funktionsblock verwendeten, zusätzlichen Programm durch Aufrufen einer betreffenden Startadresse erfolgt. Es kann sich hierbei vorzugsweise um eine relative Startadresse handeln, die sich anhand der Gliederung eines Speicherbereichs in Unterverzeichnisse orientiert und sodann aus einer Zeichenfolge besteht, die von einem Befehls-Interpreter anhand einer Indexliste des betreffenden Verzeichnisses aufgefunden wird, um die aktuelle Startadresse zu finden.

Die Erfindung bietet ferner die Möglichkeit, dass ein als Schnittstellen-Funktionsblock verwendetes, zusätzliches Programm bei Aufruf einer zugeordneten Startadresse zunächst überprüft, ob bereits wenigstens ein Bediengerät angemeldet ist, und falls dies nicht der Fall ist, wird zunächst eine Initialisierungsphase durchlaufen und bspw. die Kommunikation mit dem Überwachungsblock der Überwachungseinrichtung aufgenommen. Hierbei kann zu allererst festgestellt werden, ob ein als Schnittstellen-Funktionsblock verwendetes Programm bereits in dem Arbeitsspeicher des Server-Rechners geladen ist, um zu erkennen, ob der Schnittstellen-Funktionsblock bereits in Zusammenhang mit einem anderen Client-Rechner aktiv ist. Ist dies nicht der Fall, wird im Rahmen einer Initialisierungsphase zunächst der Schnittstellen-Funktionsblock aktiviert, d.h., in den Arbeitsspeicher des Server-Rechners geladen und bei dem oder den Überwachungs-Funktionsblöcken angemeldet.

Außerdem wird bei Aufruf der dem zusätzlichen Programm zugeordneten Startadresse für das neu angemeldete Bediengerät ein zusätzlicher Verwaltungsdatensatz geschaffen und ggf. ein Speicherbereich zugeordnet. Nachdem ggf. der erfindungsgemäße Schnittstellen-Funktionsblock in dem vorangehenden Schnitt eingerichtet worden ist, wird nun bei Anmeldung eines zusätzlichen Client-Rechners ein diesem zugeordneter Verwaltungsdatensatz angelegt und ggf. ein Speicherbereich als Informationszwischenspeicher reserviert. Ein derartiger Speicherbereich kann bspw. den Umfang einer Bitmap haben, sofern die Bildschirmdarstellung des Client-Rechners vollständig von dem Server-Rechner übernommen wird. Dadurch ist der erfindungsgemäße Funktionsblock während der Übertragung der solchermaßen ermittelten Bilddaten an das betreffende Bediengerät in die Lage versetzt, sich anderen Aufgaben zuwenden zu können, so dass ein schneller Simultanbetrieb mit Bedienung mehrerer Client-Rechner möglich ist.

Erfindungsgemäß ist weiterhin vorgesehen, dass bei der Neuanmeldung eines Bediengerätes Informationen über dessen Hardwareaufbau abgefragt und in dem betreffenden Verwaltungsdatensatz hinterlegt werden. Während das auf einem Client-Rechner implementierte Betriebssystem von untergeordneter Bedeutung ist, können jedoch Einzelheiten der Hardwarekonfiguration des betreffenden Client-Rechners, insbesondere über dessen angeschlossene Peripherieeinrichtungen, von Bedeutung sein, so dass diese bei der Anlage eines Verwaltungsdatensatzes abgefragt werden können. Es ist jedoch auch möglich, den einem eindeutig identifizierbaren Client-Rechner zugeordneten Verwaltungsdatensatz weiter zu verwenden, wenn dieser nach dem letzten Abkoppeln des betreffenden Client-Rechners nicht gelöscht worden ist.

Der Erfindungsgedanke erlaubt eine Weiterbildung dahingehend, dass der zusätzliche Funktionsblock einen Ausführungsteil umfaßt, der von dem Verwaltungsteil aufgerufen und mit den einem Bediengerät zugeordneten Informationen versorgt wird und sodann die eigentlich von diesem auszuführenden Rechenschritte übernimmt und als Ergebnisinformation bspw. eine in einen Bildschirmspeicher ladbare Bitmap od. dgl. liefert. Der Ausführungsteil wird von dem Verwaltungsteil aufgerufen, wenn von einem Client-Rechner eine zu bearbeitende Eingabe vorliegt. Es kann sich hierbei um eine mit einer Zeilenende-Taste abgeschlossene Informations- oder Befehlszeile oder auch um eine per Mausklick eingegebene und identifizierbare Funktion handeln, die nach Komplettierung der Eingabe von dem Client-Rechner abgeschickt wurde. Diese (Befehls-)Information liegt bspw. in einem vorgegebenen Speicherbereich des Server-Rechners bereit, die auszuführenden Rechenschritte sind in dem Ausführungsteil selbst oder in einer an diesen angeschlossenen Datenbank hinterlegt, und die für eine ordnungsgemäße Ausführung evtl. noch erforderlichen Zusatzinformationen kann der Ausführungsteil dem zugeordneten Verwaltungsdatensatz entnehmen. Sofern das von dem Ausführungsteil gelieferte Ergebnis einer umfangreichen, zu übertragenden Datenmenge entspricht, kann diese zunächst zwischengespeichert werden, um sodann für einen peripheren Schnittstellenbaustein an den betreffenden Client-Rechner übertragen werden zu können, während sich der erfindungsgemäße Funktionsblock bereits wieder anderen Aufgaben zuwenden kann.

Um die Ergebnisinformation in einem geeigneten Format zu erzeugen, kann von dem Ausführungsteil auf die in dem betreffenden Verwaltungsdatensatz hinterlegten Informationen über die Hardwarebeschaffenheit des betreffenden Bediengerätes, bspw. über die Größe des Bildschirmspeichers od. dgl. zugegriffen werden. Die solchermaßen erzeugte Ergebnisinformation liegt alsdann bereits in einer mit der Peripheriehardware des Client-Rechners kompatiblen Form vor und muss von diesem ausschließlich noch an die betreffende Peripherieeinheit übertragen werden.

Die Erfindung erfährt eine vorteilhafte Ausgestaltung dadurch, dass die Ergebnisinformation des Ausführungsteils von dem Verwaltungsteil in ein vorgegebenes Übertragungs-Datenformat umgesetzt und an das betreffende Bediengerät gesendet wird, bspw. zusammen mit dem Hinweis, eine übertragene Bitmap in den Bildschirmspeicher zu laden. Der begleitende Hinweis kann sich auf die Angabe des Zielgerätes beschränken, so dass der Client-Rechner weiß, ob die betreffenden Informationen auf einem Bildschirm auszugeben oder bspw. auf ein Diskettenlaufwerk zu schreiben sind.

Zur Perfektionierung des erfindungsgemäßen Verfahrens kann vorgesehen sein, dass das Datenformat bei der Kommunikation zwischen den Bediengeräten und dem Schnittstellen-Funktionsblock und/oder der diese Funktion ausführenden Baugruppe einem genormten Daten-Protokoll entspricht. Durch Verwendung eines genormten Daten-Protokolls kann bei der Schaffung der erfindungsgemäßen Schnittstellenkomponente zu einem Großteil auf bereits vorhandene Hard- und/oder Softwarekomponenten zurückgegriffen werden.

Schließlich entspricht es der Lehre der Erfindung, dass auf den Bediengeräten zusätzlich zu einem Betriebssystem ein Programm zur Anzeige und/oder Schnellauswertung der empfangenen Daten geladen ist. Ein derartiges Programm kann nach Art eines Browsers strukturiert sein, so dass im Bereich eines Client-Rechners sowohl hard- wie auch softwaremäßig ausschließlich auf Standardkomponenten zurückgegriffen werden kann. Eine individuelle Komponente, die zur Entschlüsselung von übertragenen Bearbeitungs-, insbesondere Weiterleitungshinweisen geeignet ist, kann sodann ggf. von dem Server-Rechner geladen werden, sofern diese noch nicht auf einem Client-Rechner verfügbar ist. Eine derartige Individualkomponente kann bspw. die Qualität einer oder mehrerer, anwenderspezifischer Sonderfunktionen im Rahmen des Browser-Programms haben. Es empfiehlt sich daher, beim erstmaligen Anmelden eines (neuen) Client-Rechners von dem Server-Rechner eine Anfrage vorzunehmen, ob die Individualkomponente bereits auf diesem Client-Rechner geladen ist, und diese sodann ggf. in einer für das von dem Client-Rechner verwendete Betriebssystem passenden Form bereitzustellen. Da gegenwärtig bei neu erworbenen Computergeräten bereits eine Vielzahl von Programmen, u.a. auch Standard-Browser-Programme, mitgeliefert werden, sind nach Anschluß eines derartigen Computers und Installation der mitgelieferten Standardsoftware kaum noch individuelle Zusatzarbeiten erforderlich, vielmehr kann der Rechner fast unverzüglich und somit auch von mit dem erfindungsgemäßen Programm nicht vertrauten Personen in Betrieb genommen werden. Die einzige Spezialvoraussetzung ist dabei allenfalls das Vorhandensein einer zu dem betreffenden Netzwerk kompatiblen Netzwerkkarte, um ein reibungsloses Zusammenspiel der verschiedenen Hardwarekomponenten zu gewährleisten.

Der erfindungsgemäße Schnittstellen-Funktionsblock kann als eigenständiger Programmteil auf dem Server-Rechner implementiert werden, oder er kann als hardwaremäßig an diesen anschließbares Gerät ausgestaltet sein, das sowohl über den Server-Rechner von einer Bedienperson aus initialisierbar ist oder die Qualität eines eigenen Rechners mit Ein- und Ausgabemöglichkeit aufweist. Im Rahmen eines eigenständigen Bausteins ist es durchaus denkbar, nach Umsetzen der vorzunehmenden Funktionen in einen Kontaktplan die Funktionalität nach Art eines Analogrechners unter ausschließlicher Verwendung von Hardwarekomponenten zu realisieren.

Weitere Merkmale, Einzelheiten, Vorteile und Wirkungen auf der Basis der Erfindung ergeben sich aus der nachfolgenden Beschreibung bevorzugter Ausführungsbeispiele der Erfindung sowie anhand der Zeichnung. Hierbei zeigt:
- Fig. 1: ein Blockschaltbild einer ersten, nach dem erfindungsgemäßen Verfahren betriebenen Anordnung; sowie
- Fig. 2: ein Blockschaltbild einer weiteren, erfindungsgemäßen Anordnung.

In den beiden Figuren der Zeichnung sind unterschiedliche Netzwerkstrukturen 1, 2 wiedergegeben, bei denen die Erfindung vorteilhaft einsetzbar ist. Dabei entspricht jeweils der mit durchgezogenen Linien ausgeführte Schaltungsteil der Minimalkonfiguration, während die strichliiert wiedergegebenen Ergänzungen optionale Zusatzeinheiten darstellen.

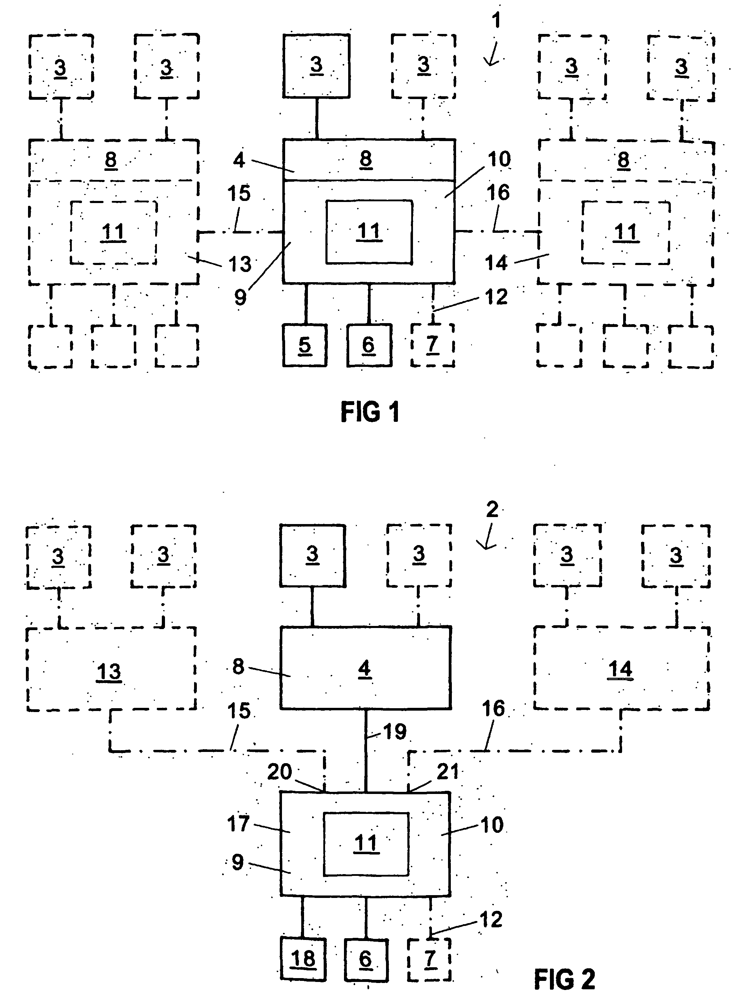

In der Minimalkonfiguration nach Fig. 1 ist wenigstens ein Steuerungsgerät 3 für einen Anlagenteil vorgesehen, das diesen nach Maßgabe eines internen Programms steuert. Der jeweilige Zustand des betreffenden Anlagenteiles kann von einem Bedienungs- und/oder Überwachungsgerät 4 ermittelt und bspw. an einem daran angeschlossenen Bildschirm 5 für das Kontrollpersonal sichtbar gemacht werden. Ferner ist wenigstens ein von dem Bedienungs- und/oder Überwachungsgerät 4 abgesetztes Bedienterminal 6 vorgesehen, mit dem an einem entfernten Ort dieselbe Funktionalität realisiert werden kann wie mit der Ein- und/oder Ausgabemöglichkeit 5 des Bedienungs- und/oder Überwachungsgerätes 4 selbst. Um von diesem und ggf. weiteren Bedienterminals 7 störungsfrei mit dem Bedienungs- und/oder Überwachungs-Funktionsblock 8 des Bedienungs- und/oder Überwachungsgeräts 4 kommunizieren zu können, verfügt dieses über einen Schnittstellen-Funktionsblock 9, der die Aktionen der verschiedenen Ein- und Ausgabegeräte 5 - 7 wie auch des Bedienungs- und/oder Überwachungs-Funktionsblocks 8 miteinander koordiniert.

Dabei ist es eine Zusatzaufgabe des Schnittstellen-Funktionsbausteins 9, einen ggf. nicht in einem Netzwerk zusammen mit anderen Bedienterminals 6, 7 lauffähigen Bedienungs- und/oder Überwachungs-Funktionsblock 8 derart zu ergänzen, dass zusammen mit standardisierten Rechnern 6, 7 eine Kommunikation nach Art eines Server-Client-Netzwerks möglich ist. Hierbei dient das Bedienungs- und/oder Überwachungsgerät 4 als Server, das nicht nur die eigentliche Bedienungs- und/oder Überwachungs-Funktionalität 8 umfasst, sondern auch die Kommunikationsmöglichkeiten auf mehrere, bspw. bis zu 50 Client-Rechner 6, 7 erweitert.

Zur Durchführung dieser ersten Aufgabe ist in dem Schnittstellen-Funktionsblock 9 ein Verwaltungsteil 10 vorgesehen, der in der Lage ist, das Quellterminal 6, 7 eingegebener Daten, bspw. Befehle oder Informationen, zu ermitteln und die betreffenden Daten bspw. nach Ergänzung durch ein dem betreffenden Terminal 6, 7 zugeordnetes Identifizierungskennzeichen an den Bedienungs- und/oder Überwachungs-Funktionsblock 8 weiterzuleiten. Diesem obliegt es sodann, das angeschlossene Steuergerät 3 zu einer entsprechenden Betriebskorrektur zu veranlassen.

Eingebettet in den Schnittstellen-Funktionsblock 9 ist ferner ein Ausführungsteil 11, der in der Lage ist, die Rechenleistung der angeschlossenen Client-Rechner 6, 7 weitgehend zu übernehmen. Betroffen hiervon ist insbesondere die Auswahl der auf einem Bildschirm eines Client-Rechners 6, 7 anzuzeigenden Masken und die Anordnung derselben im Rahmen einer Bedienoberfläche, so dass bspw. ein der gewünschten Bildinformation entsprechender Datenstrom erzeugt und von dem Schnittstellen-Funktionsblock 9 an den betreffenden Client-Rechner 6, 7 verschickt wird. Dessen einzige Aufgabe besteht sodann darin, aus einem beigefügten Hinweis das Zielgerät zu entnehmen, bspw. "Ausgabe auf dem Bildschirm" und sodann den Datenstrom an den richtigen Adressaten weiterzuleiten.

Dies hat einerseits den Vorteil, dass sämtliche Informationen über den momentanen Zustand der einzelnen Bedienoberflächen sämtlicher, angeschlossener Client-Rechner 6, 7 in dem Schnittstellen-Funktionsbaustein 10 und damit in dem Bedienungs- und/oder Überwachungsgerät 4 vorliegen, so dass es keine größeren Schwierigkeiten bereitet, diesen Zustand von einem Client-Rechner 6 auf einen anderen Client-Rechner 7 zu übertragen, wenn bspw. eine Wartungs- oder Inbetriebnahmeperson ihren Standort wechselt. Auch kann die Art der in den verschiedenen Bildschirmmasken ausgebbaren Informationen auf einfachstem Weg dadurch modifiziert werden, dass zusammen mit einem geänderten Bedienungs- und/oder Überwachungs-Funktionsblock 8 auch ein entsprechend angepasster Schnittstellen-Funktionsblock 9 in das Bedienungs- und/oder Überwachungsgerät 4 geladen wird. Änderungen im Bereich der verschiedenen Client-Rechner 6, 7 sind dabei nicht erforderlich, so dass Modifikationen einer Steuerungsstruktur 3 und daraus resultierende Änderungen der Überwachungsstruktur mit einem geringstmöglichen Programmierungs- und Installationsaufwand vorgenommen werden können.

Die abgesetzten Client-Rechner 6, 7 können hinsichtlich ihrer Hardware und ihres Betriebssystems vergleichsweise frei gewählt werden, sofern die angeschlossenen Peripheriegeräte wie Bildschirm, Tastatur od. dgl. einem von dem Schnittstellen-Funktionsbaustein 9 unterstützten Konzept entsprechen. Die Client-Rechner 6, 7 benötigen neben dem Betriebssystem ausschließlich ein Programm zur Anzeige und/oder Schnellauswertung der von dem Schnittstellen-Funktionsblock 9 erhaltenen Informationen und zur Absendung vollständig eingegebener Informationen (nach Betätigung einer Abschlusstaste) an den Schnittstellen-Funktionsblock 9. Hierfür können im Idealfall standardisierte Browser-Programme verwendet werden, die ggf. im Fall einer konkreten Anwendung mit einer oder mehreren Individualkomponenten ergänzt sein können, um einen bidirektionalen Informationsfluss zu ermöglichen.

Dabei ist die Ankopplung der einzelnen Client-Rechner 6, 7 an dem Bedienungs- und/oder Überwachungsgerät 4 auf vielfältige Art möglich, bspw. über sternförmig bei dem Server-Rechner 4 zusammenlaufende Datenleitungen, über ein Netzwerk mit einer Ringstruktur, wo jeder angeschlossene Client-Rechner eine individuelle Adresse erhalten hat, über Infrarot- oder Funkschnittstellen mit jeweils einem oder mehreren Kanälen, etc. Ferner ist auch denkbar, einen abgesetzten Client-Rechner 7 über ein nationales oder ein internationales Datennetz anzukoppeln, wobei die Kommunikation bspw. mittels Satelliten über Ozeane hinweggeführt werden kann. Hierbei ist es von großem Vorteil, wenn nahezu jede beliebige Client-Rechner-Hardware mit nahezu jedem Betriebssystem und allen unter diesem jeweils lauffähigen Standard-Browser-Programmen herangezogen werden kann, so dass in anderen Staaten evtl. verbreitete, abweichende Standardkomponenten sich bei einer Kommunikation nicht als störend erweisen. Ein weiterer Vorteil hierbei ist, dass auf den Verbindungsleitungen 12 bevorzugt genormte Daten-Protokolle verwendet werden. All diese Maßnahmen führen dazu, dass sich eine ungeahnte Flexibilität und Universalität ergibt, wobei das Bedienungs- und/oder Überwachungsgerät 4 von nahezu jedem denkbaren Computer aus erreicht werden kann, um den Betrieb eines Steuergerätes 3 zu überwachen und ggf. modifizieren. Eine ggf. erforderliche Individual-Komponente kann nach Herstellung der Verbindung 12 zu dem Bedienungs- und/oder Überwachungsgerät 4 von diesem geladen werden.

In Fig. 1 ist weiterhin angedeutet, dass auch eine Verbindung zwischen unterschiedlichen Server-Rechnern 4, 13, 14 möglich ist, die ebenfalls vorzugsweise über den erfindungsgemäßen Schnittstellen-Funktionsblock 9 hergestellt werden kann. Über diese Verbindungen, die bspw. im Rahmen eines firmeninternen Intranetzes 15 oder eines externen, nationalen oder internationalen Datennetzes 16 ausgeführt sein können, können einerseits die für einen optimalen Betrieb der jeweils angeschlossenen Steuergeräte 3 benötigten Informationen ausgetauscht werden, andererseits ist es auch möglich, von einem bestimmten Client-Rechner 6, 7 aus Informationen, insbesondere Betriebsparameter eines anderweitig überwachten 13 Anlagenteiles desselben Firmengeländes einsehen zu können, oder über das Internet 16 sogar Betriebsparameter einer entfernten Produktionsstätte, wobei außerdem eine Einflussnahme auf diese Betriebsparameter möglich ist. Hierzu dienen zusätzliche Kanäle der erfindungsgemäßen Schnittstellen-Funktionsblöcke 9, die insbesondere einen Anschluss entsprechender Funktionsblöcke 9 anderer Bedienungs- und/oder Überwachungsgeräte 13, 14 zulassen.

Die in Fig. 2 gezeigte Netzwerkstruktur 2 unterscheidet sich von der Netzwerkstruktur 1 vor allem dadurch, dass hier der Schnittstellen-Funktionsblock 9 nicht zusammen mit dem eigentlichen Bedienungs- und/oder Überwachungs-Funktionsblock 8 in ein und demselben Gerät implementiert ist, sondern in einem eigenen Schnittstellengerät 17, das u.a. als eigenständiger Rechner ausgebildet und mit angeschlossener Peripherie 18, insbesondere Bildschirm und Tastatur, ausgerüstet sein kann. Das Schnittstellengerät 17 ist bspw. über eine Kabelverbindung 19 mit dem eigentlichen Bedienungs- und/oder Überwachungsgerät 4 verbunden. Die Anschlussmöglichkeit verschiedener Client-Rechner 6, 7 entspricht völlig den oben bei der Netzwerkstruktur 1 geschilderten Möglichkeiten.

Sofern neben dem Verbindungskanal 19 zur Kommunikation mit dem benachbarten Bedienungs- und/oder Überwachungsgerät 4 noch weitere Ein- und/oder Ausgänge 20, 21 vorgesehen sind, können von ein und demselben Client-Rechner 6, 7 aus auch anderweitig installierte und überwachte 13, 14 Steuergeräte 3 erreicht und der dortige Betrieb überprüft und ggf. modifiziert werden. Dabei kann diese Verbindung zu weiteren Bedienungs- und/oder Überwachungsgeräten 13, 14 sowohl über ein firmeneigenes Intranet 15 wie auch über ein externes Internet 16 erfolgen. Solchenfalls hat der erfindungsgemäße Schnittstellen-Funktionsbaustein 17 die Qualität eines Multiplexers, der von ein und demselben Bedienungsgerät 6, 7 stammende Informationen an die unterschiedlichsten Bedienungs- und/oder Überwachungsgeräte 4, 13, 14 weiterleiten kann.

Durch eine Fernbedienungsmöglichkeit lassen sich sog. "Flying Terminals" realisieren, wobei der Bediener mit einem Taschengerät (Laptop od. dgl.) auf verschiedene Server einer Anlage zugreifen kann, ohne die dortigen Projektierungsdaten zu kennen; es ist ausschließlich der Kommunikationsaufbau und die richtige Adressierung erforderlich. Eine Aktualisierung eines derartigen "Flying Terminals" ist daher niemals erforderlich.

## Patentansprüche

1. Verfahren zur Bedienung und/oder Beobachtung einer Einrichtung (4) zur Überwachung wenigstens eines mit einer Anlage gekoppelten Steuergerätes (3) von/an wenigstens einem abgesetzten, mit der Überwachungseinrichtung (4) kommunizierenden Bediengerät (6, 7), bei dem im Rahmen der Überwachungseinrichtung (4) oder eines an diese angeschlossenen Gerätes (17) ein zusätzlicher Funktionsblock (9) vorgesehen, insbesondere in Form eines zusätzlichen Programms abgespeichert ist, der sich nach Art eines Schnittstellenbausteins in die Kommunikation zwischen der Überwachungseinrichtung (4) oder einem Überwachungs-Funktionsblock (8) einerseits und den angeschlossenen Bediengeräten (6, 7) andererseits einschaltet und die an ein angeschlossenes Bediengerät (6, 7) gerichteten Informationen auswertet und derart aufbereitet, dass die sodann weitergeleiteten Informationen (12) von dem betreffenden Bediengerät (6, 7) nach Art eines Terminals direkt angezeigt werden können, wobei der Schnittstellen-Funktionsblock (9) einen Ausführungsteil (11) und einen Verwaltungsteil (10) umfasst und wobei der Ausführungsteil von dem Verwaltungsteil (10) aufgerufen und mit den einem Bediengerät (6, 7) zugeordneten Informationen versorgt wird und sodann die eigentlich von diesem auszuführenden Rechenschritte übernimmt und als Ergebnisinformation insbesondere eine in einen Bildschirmspeicher ladbare Bitmap liefert.

2. Verfahren nach Anspruch 1, **dadurch gekenn-** zeichnet, dass der Schnittstellen-Funktionsblock (9) die von einem Bediengerät (6, 7) auszuführenden Funktionen, insbesondere Rechenschritte, zumindest teilweise übernimmt.

3. Verfahren nach Anspruch 1 oder 2, **dadurch ge- kennzeichnet,** dass ein als Schnittstellen-Funktionsblock (9) verwendeter, zusätzlicher Programmteil zur Ausführung zumindest teilweise in den Arbeitsspeicher der Überwachungseinrichtung (4) oder des betreffenden, an diese angeschlossenen Schnittstellengeräts (17) geladen wird.

4. Verfahren nach einem der vorhergehenden Ansprüche, **dadurch gekennzeichnet, dass** der Schnittstellen-Funktionsblock (9), insbesondere -Programmteil mehrfach, insbesondere von unterschiedlichen Bediengeräten (6, 7) ansprechbar ist und solchenfalls die dem betreffenden Bediengerät (6, 7) zugeordneten, individuellen Berechnungen ausführt und Rechenergebnisse in dem betreffenden Bediengerät (6, 7) eindeutig zuordenbarer Weise abspeichert.

5. Verfahren nach einem der vorhergehenden Ansprüche, **dadurch gekennzeichnet, dass** der Schnittstellen-Funktionsblock (9), insbesondere -Programmteil, verschiedene, angeschlossene Bediengeräte (6, 7) individuell ansteuert.

6. Verfahren nach einem der vorhergehenden Ansprüche, **dadurch gekennzeichnet, dass** der Schnittstellen-Funktionsblock (9), insbesondere -Programmteil von der Überwachungslogik oder dem Überwachungsprogramm (8) der Überwachungseinrichtung (4) mit unterschiedlichen Parametern, insbesondere Geräteadressen, ansprechbar ist, um die zugeordneten Bediengeräte (6, 7) individuell ansteuern zu können.

7. Verfahren nach einem der vorhergehenden Ansprüche, **dadurch gekennzeichnet, dass** die Kommunikation zwischen dem Schnittstellen-Funktionsblock (9) und dem Überwachungs-Funktionsblock (8) der Überwachungseinrichtung (4) auf einem Kanal zusammengefasst ist.

8. Verfahren nach Anspruch 7, **dadurch gekenn- zeichnet,** dass der Schnittstellen-Funktionsblock (9) mehrere Kanäle zur Kommunikation (15, 16) mit mehreren Überwachungs-Funktionsblöcken (8) und/oder Uberwachungseinrichtungen (4, 13, 14) aufweist.

9. Verfahren nach einem der vorhergehenden Ansprüche, **dadurch gekennzeichnet, dass** der Schnittstellen-Funktionsblock (9) bei downlinkseitiger Kommunikation (von der Überwachungseinrichtung 8 zu einem Bediengerät 6, 7) als Verteiler, insbesondere Demultiplexer betrieben wird.

10. Verfahren nach einem der vorhergehenden Ansprüche, **dadurch gekennzeichnet, dass** der Schnittstellen-Funktionsblock (9) bei uplinkseitiger Kommunikation (von einem Bediengerät 6, 7 zu der Uberwachungseinrichtung 8) als Signalzusammenführungsbaustein, bspw. nach Art einer ODER-Verkopplung, insbesondere jedoch als Multiplexer, betrieben wird.

11. Verfahren nach einem der vorhergehenden Ansprüche, **dadurch gekennzeichnet, dass** die uplinkseitige Kommunikation prioritätsgesteuert abläuft.

12. Verfahren nach Anspruch 11, **dadurch ge- kennzeichnet,** dass bei Prioritätsvergabe an ein Bediengerät (6, 7) von einem anderen Bediengerät (7, 6) eingehende Informationen unterdrückt oder in einen dem betreffenden Bediengerät (7, 6) zugeordneten oder zuordenbaren Zwischenspeicher umgeleitet werden.

13. Verfahren nach einem der vorhergehenden Ansprüche, **dadurch gekennzeichnet, dass** alle angeschlossenen Bediengeräte (6, 7) sowie ggf. diesen zugeordnete Speicherbereiche, insbesondere für die Zwischenablage eingehender Informationen, von dem Schnittstellen-Funktionsblock (9) verwaltet (10) werden.

14. Verfahren nach Anspruch 13, **dadurch ge**- **kennzeichnet,** dass die erstmalige Anmeldung eines Bediengerätes (6, 7) bei einem als Schnittstellen-Funktionsblock (9) verwendeten, zusätzlichen Programm durch Aufrufen einer betreffenden Startadresse erfolgt.

15. Verfahren nach Anspruch 14, **dadurch ge- kennzeichnet**, dass ein als Schnittstellen-Funktionsblock (9) verwendetes, zusätzliches Programm bei Aufruf einer zugeordneten Startadresse zunächst überprüft, ob bereits wenigstens ein Bediengerät (6, 7) angemeldet ist, und falls dies nicht der Fall ist, wird zunächst eine Initialisierungsphase durchlaufen und bspw. die Kommunikation mit dem Überwachungsblock (8) der Überwachungseinrichtung (4) aufgenommen.

16. Verfahren nach Anspruch 14 oder 15, **dadurch gekennzeichnet, dass** bei Aufruf der dem Schnittstellen-Programm (9) zugeordneten Startadresse für das neu angemeldete Bediengerät (6, 7) ein zusätzlicher Verwaltungsdatensatz geschaffen und ggf. ein Speicherbereich zugeordnet wird.

17. Verfahren nach einem der Ansprüche 14 bis 16, **da- durch gekennzeichnet**, dass bei der Neuanmeldung eines Bediengerätes (6, 7) Informationen über dessen Hardwareaufbau abgefragt und in dem betreffenden Verwaltungsdatensatz hinterlegt werden.

18. Verfahren nach Anspruch 18, **dadurch ge- kennzeichnet**, dass die in dem betreffenden Verwaltungsdatensatz hinterlegten Informationen über die Hardwarebeschaffenheit des betreffenden Bediengerätes (6, 7), bspw. über die Größe des Bildschirmspeichers od. dgl. von dem Ausführungsteil (11) verwendet werden, um die Ergebnisinformation in einem geeigneten Format zu erzeugen.

19. Verfahren nach Anspruch 18 oder 19, **dadurch gekennzeichnet, dass** die Ergebnisinformation des Ausführungsteils (11) von dem Verwaltungsteil (10) in ein vorgegebenes Übertragungs-Datenformat umgesetzt und an das betreffende Bediengerät (6, 7) übertragen wird, bspw. zusammen mit dem Hinweis, die übertragene Bitmap in den Bildschirmspeicher zu laden.

20. Verfahren nach einem der vorhergehenden Ansprüche, **da- durch gekennzeichnet**, dass das Übertragungs-Datenformat bei der Kommunikation zwischen den Bediengeräten (6, 7) und dem Schnittstellen-Funktionsblock (9) und/oder der diese Funktion ausführenden Baugruppe (17) einem genormten Daten-Protokoll entspricht.

21. Verfahren nach einem der vorhergehenden Ansprüche, **da- durch gekennzeichnet**, dass auf den Bediengeräten (6, 7) zusätzlich zu einem Betriebssystem ein Programm zur Anzeige und/oder Schnellauswertung der empfangenen Daten geladen ist.

22. Anordnung (1; 2) zur Bedienung und/oder Beobachtung einer Einrichtung (4) zur Überwachung wenigstens eines mit einer Anlage gekoppelten Steuergerätes (3) von/an wenigstens einem abgesetzten, mit der Überwachungseinrichtung kommunizierenden Bediengerät (6, 7), bei dem im Rahmen der Überwachungseinrichtung (4) oder eines an diese angeschlossenen Geräts (17) ein zusätzlicher Funktionsblock (9) vorgesehen ist, der sich nach Art eines Schnittstellenbausteins in die Kommunikation zwischen der Überwachungseinrichtung (4) oder einem Überwachungs-Funktionsblock (8) einerseits und den angeschlossenen Bediengeräten (6, 7) andererseits einschaltet und die an ein angeschlossenes Bediengerät (6, 7) gerichteten Informationen auswertet und derart aufbereitet, dass die sodann weitergeleiteten Informationen von dem betreffenden Bediengerät (6, 7) nach Art eines Terminals direkt angezeigt werden können, wobei der Schnittstellen-Funktionsblock (9) einen Teil (10) zur Verwaltung der angeschlossenen Bediengeräte (6, 7) und einen Ausführungsteil (11) umfasst, der von dem Verwaltungsteil (10) aufgerufen und mit den einem Bediengerät (6, 7) zugeordneten Informationen versorgt wird und sodann die eigentlich von diesem auszuführenden Rechenschritte übernimmt und als Ergebnisinformation insbesondere eine in einen Bildschirmspeicher ladbare Bitmap liefert.

23. Anordnung nach Anspruch 23 oder 24, **dadurch gekennzeichnet, dass** der Schnittstellen-Funktionsblock (9) mehrere Kanäle zur Kommunikation (15, 16) mit mehreren Überwachungs-Funktionsblöcken (8) und/oder Überwachungseinrichtungen (4, 13, 14) aufweist.

## Claims

1. Method for operating and/or observing a device (4) for monitoring at least one control device (3) that is coupled with a plant, from/at at least one connected remote operator unit (6, 7) that communicates with the monitoring device (4) in which, as part of the monitoring device (4) or of a device connected to it (17) an additional function block (9) is provided, especially being stored in the form of an additional program, which intervenes as an interface module in communications between the monitoring device (4) on the one hand and the connected operator units (6, 7) on the other hand and which evaluates and processes information (12) addressed to the connected operator unit (6, 7) such that the connected operator unit (6, 7) can directly display the information as a terminal, with the interfacing function block (9) comprising an execution part (11) and an administration part (10) and with the execution part being called by the administration part (10) and supplied with the information assigned to an operator unit (6, 7) and then taking over the computation steps to actually be executed by this unit and delivering as result information especially a bitmap that can be loaded into a screen memory.

2. Method in accordance with Claim 1, **characterized in that** the interface function block (9) at least partly takes over the functions, especially the computation steps, to be exectued by an operator unit (6, 7).

3. Method in accordance with Claim 1 or 2, **characterized in that** an additional program part used as the interfacing function block (9) is loaded for execution at least partially into a working memory of the monitoring device (4) or of an interface device (17) connected to it.

4. Method in accordance with with one of the previous claims, **characterized in that** the interfacing function block (9), especially program part, can be multiply addressed especially by different operator units (6, 7), to execute individual computations associated with the addressing operator unit (6, 7), and to store the computation results in a uniquely assigned manner in the addressing operator unit (6, 7).

5. Method in accordance with with one of the previous claims, **characterized in that** the interfacing function block (9), especially program part, individually controls different connected operator units (6, 7).

6. Method in accordance with with one of the previous claims, **characterized in that** the interfacing function block (9), especially program part, is addressable with differing parameters by the monitoring logic or the monitoring program (8) or the monitoring device (4), in order to control the plurality of operator units (6, 7) individually.

7. Method in accordance with with one of the previous claims, **characterized in that** the communication between the interfacing function block (9) and the monitoring function block (8) of the monitoring device (4)is combined in one channel.

8. Method in accordance with Claim 7, **characterized in that** the interfacing function block (9) comprises a plurality of channels (15, 16) for communicating with a plurality of monitoring function blocks (8) and/or monitoring devices (4, 13, 14).

9. Method in accordance with with one of the previous claims, **characterized in that** the interfacing function block (9) in downlink-side communication (from the monitoring device 8 to an operator unit 6, 7), operates as a distributor, especially as a demultiplexer.

10. Method in accordance with with one of the previous claims, **characterized in that** the interfacing function block (9), in uplink-side communication (from the operator units 6, 7 to the monitoring device 8), operates as a signal combining module for example as a type or OR operator, especially however as a multiplexer.

11. Method in accordance with with one of the previous claims, **characterized in that** uplink-side communication is priority-controlled.

12. Method in accordance with Claim 11, **characterized in that**, when a priority is assigned to one of the operator units (6, 7), incoming information from another of the operator units (7, 6) is suppressed or is redirected into a buffer assigned or assignable to the other operating unit (7, 6).

13. Method in accordance with with one of the previous claims, **characterized in that** the interfacing function block (9) manages (10) all the connected operator units (6, 7) as well as where necessary memory areas assigned to them, particularly for buffering incoming information.

14. Method in accordance with Claim 13, **characterized in that** an operator unit (6, 7) is logged onto an additional program used as an interfacing function block (9) by calling a respective starting address.

15. Method in accordance with Claim 14, **characterized in that**, when an assigned starting address is called, the additional program used as the interfacing function block (9) first checks whether at least one operator unit (6, 7) has already logged on and, if not, first executes an initialization phase and for example starts communicating with a monitoring block (8) of the monitoring device (4).

16. Method in accordance with Claim 14 or 15, **characterized in that**, when the starting address for the new operator unit (6, 7) assigned to the interfacing program (9) is called, an additional management data record is created and if necessary a memory area assigned for the new operator unit.

17. Method in accordance with one of the Claims 14 to 16, **characterized in that**, when the new operator unit (6, 7) is logged on, information on the hardware structure of the new operator unit is queried and stored in the management data record assigned for the new operator unit.

18. Method in accordance with Claim 18, **characterized in that** the information stored in a respective management data record comprising information on hardware characteristics of the given operator unit (6, 7), for example information defining screen memory size for the given operator unit or such like, is used by the execution part (11) to generate the result information in a suitable format.

19. Method in accordance with Claim 18 or 19, **characterized in that** the result information of the execution part (11) is converted into a predefined transmission data format by the management part (11) and is transmitted to the given operator unit (6, 7), for example together with an instruction to load the transmitted result information as a bitmap into a screen memory of the given operator unit.

20. Method in accordance with one of the prevous claims, **characterized in that** the transmission data format used in communicating between the operator units (6, 7) and the interfacing function block (9) and/or the module executing this function (17) utilizes a standard data protocol.

21. Method in accordance with one of the prevoous claims, **characterized in that** the operator units (6, 7) are provided, in addition to an operating system, with a program for at least one of displaying and rapidly analyzing data received from the interfacing function block.

22. An assembly (1; 2)for operating and/or observing a device (4) for monitoring at least one control device (3) that is coupled with a plant, from/at at least one connected remote operator unit (6, 7) that communicates with the monitoring device (4) in which, as part of the monitoring device (4) or of a device connected to it (17) an additional function block (9) is provided, especially being stored in the form of an additional program, which intervenes as an interfacing module in communications between the monitoring device (4) or a monitoring function block (8) on the one hand and the connected operator units (6, 7) on the other hand and which evaluates and processes information addressed to the connected operator unit (6, 7) such that the connected operator unit (6, 7) can directly display the forwarded information as a terminal, with the interface function block (9) comprising a part (10) for managing the connected operator units (6, 7) and an execution part (11) which is called by the administration part (10) and supplied with the information assigned to an operator unit (6, 7) and then takes over the computing steps to actually be executed by this unit and delivers as result information especially a bitmap that can be loaded into a screen memory.

23. Assembly in accordance with Claims 23 or 24, **characterized in that** the interfacing function block (9) has a plurality of channels for communicating (15, 16) with a plurality of monitoring function blocks (8) and/or monitoring devices (4, 13, 14).

## Revendications

1. Procédé pour la commande et/ou l'observation d'un dispositif (4) destiné à la surveillance d'au moins un appareil pilote (3) couplé à une installation par / sur au moins un appareil de commande (6, 7) distant et communiquant avec le dispositif de surveillance (4), dans lequel il est prévu dans le cadre du dispositif de surveillance (4) ou d'un appareil (17) raccordé à celui-ci un bloc fonctionnel supplémentaire (9), notamment mémorisé sous la forme d'un programme supplémentaire, qui s'intègre à la manière d'un module d'interface dans la communication entre le dispositif de surveillance (4) ou un bloc fonctionnel de surveillance (8) d'une part et les appareils de commande (6, 7) raccordés d'autre part et qui évalue les informations adressées à un appareil de commande (6, 7) raccordé et les prépare de telle sorte que les informations (12) alors retransmises peuvent être affichées directement par l'appareil de commande (6, 7) concerné comme le ferait un terminal, le bloc fonctionnel d'interface (9) comprenant une partie d'exécution (11) et une partie de gestion (10) et la partie d'exécution étant appelée par la partie de gestion (10) et étant alimentée avec les informations associées à un appareil de commande (6, 7) et prenant alors en charge les étapes de calcul à exécuter en fait par celui-ci et fournissant comme information de résultat notamment un fichier Bitmap pouvant être chargé dans une mémoire d'écran.

2. Procédé selon la revendication 1, **caractérisé par le fait que** le bloc fonctionnel d'interface (9) prend en charge au moins en partie les fonctions, notamment les étapes de calcul, à exécuter par un appareil de commande (6, 7).

3. Procédé selon la revendication 1 ou 2, **caractérisé par le fait que**, pour son exécution, une partie de programme supplémentaire utilisée comme bloc fonctionnel d'interface (9) est chargée au moins en partie dans la mémoire de travail du dispositif de surveillance (4) ou de l'appareil d'interface (17) concerné et raccordé à celui-ci.

4. Procédé selon l'une des revendications précédentes, **caractérisé par le fait que** le bloc fonctionnel d'interface (9), notamment la partie de programme, peut être appelé plusieurs fois, notamment par différents appareils de commande (6, 7), et que, dans ce cas, il exécute les calculs individuels associés à l'appareil de commande (6, 7) concerné et mémorise des résultats de calcul de manière à pouvoir les associer sans équivoque à l'appareil de commande (6, 7) concerné.

5. Procédé selon l'une des revendications précédentes, **caractérisé par le fait que** le bloc fonctionnel d'interface (9), notamment la partie de programme, commande individuellement différents appareils de commande (6, 7) raccordés.

6. Procédé selon l'une des revendications précédentes, **caractérisé par le fait que** le bloc fonctionnel d'interface (9), notamment la partie de programme, peut être adressé par la logique de surveillance ou le programme de surveillance (8) du dispositif de surveillance (4) avec différents paramètres, notamment différentes adresses d'appareils, pour pouvoir commander individuellement les appareils de commande (6, 7) associés.

7. Procédé selon l'une des revendications précédentes, **caractérisé par le fait que** la communication entre le bloc fonctionnel d'interface (9) et le bloc fonctionnel de surveillance (8) du dispositif de surveillance (4) est coordonnée sur un canal.

8. Procédé selon la revendication 7, **caractérisé par le fait que** le bloc fonctionnel d'interface (9) comporte plusieurs canaux pour la communication (15, 16) avec plusieurs blocs fonctionnels de surveillance (8) et/ou dispositifs de surveillance (4, 13, 14).

9. Procédé selon l'une des revendications précédentes, **caractérisé par le fait que** le bloc fonctionnel d'interface (9) fonctionne lors d'une communication descendante (du dispositif de surveillance 8 à un appareil de commande 6, 7) comme un répartiteur, notamment un démultiplexeur.

10. Procédé selon l'une des revendications précédentes, **caractérisé par le fait que** le bloc fonctionnel d'interface (9) fonctionne lors d'une communication montante (d'un appareil de commande 6, 7 au dispositif de surveillance 8) comme un module de regroupement de signaux, par exemple à la manière d'un couplage OU, mais notamment comme multiplexeur.

11. Procédé selon l'une des revendications précédentes, **caractérisé par le fait que** la communication montante se déroule selon une commande par priorité.

12. Procédé selon la revendication 11, **caractérisé par le fait que**, lorsque la priorité est donnée à un appareil de commande (6, 7), des informations arrivant d'un autre appareil de commande (7, 6) sont supprimées ou sont détournées vers une mémoire intermédiaire associée ou pouvant être associée à l'appareil de commande (7, 6) concerné.

13. Procédé selon l'une des revendications précédentes, **caractérisé par le fait que** tous les appareils de commande (6, 7) raccordés ainsi qu'éventuellement des zones de mémoire associées à ceux-ci, notamment pour l'enregistrement temporaire d'informations entrantes, sont gérés (10) par le bloc fonctionnel d'interface (9).

14. Procédé selon la revendication 13, **caractérisé par le fait que** la première annonce d'un appareil de commande (6, 7) auprès d'un programme supplémentaire utilisé comme bloc fonctionnel d'interface (9) s'effectue par appel d'une adresse de début appropriée.

15. Procédé selon la revendication 14, **caractérisé par le fait qu'**un programme supplémentaire utilisé comme bloc fonctionnel d'interface (9) vérifie d'abord lors de l'appel d'une adresse de début associée si au moins un appareil de commande (6, 7) est déjà annoncé et, si ce n'est pas le cas, on effectue d'abord une phase d'initialisation et par exemple on prend en charge la communication avec le bloc de surveillance (8) du dispositif de surveillance (4).

16. Procédé selon la revendication 14 ou 15, **caractérisé par le fait que**, lors de l'appel de l'adresse de début associée au programme d'interface (9) pour le nouvel appareil de commande (6, 7) annoncé, on crée un bloc de données de gestion supplémentaire et éventuellement on associe une zone de mémoire.

17. Procédé selon l'une des revendications 14 à 16, **caractérisé par le fait que**, lors de la nouvelle annonce d'un appareil de commande (6, 7), on demande des informations sur sa structure matérielle et on les enregistre dans le bloc de données de gestion approprié.

18. Procédé selon la revendication 17, **caractérisé par le fait que** les informations enregistrées dans le bloc de données de gestion approprié et concernant la conception matérielle de l'appareil de commande (6, 7) considéré, par exemple sur la taille de la mémoire d'écran ou autres, sont utilisées par la partie d'exécution (11) pour produire l'information de résultat avec un format approprié.

19. Procédé selon la revendication 17 ou 18, **caractérisé par le fait que** l'information de résultat de la partie d'exécution (11) est convertie par la partie de gestion (10) en un format de données de transmission prédéterminé et est transmise à l'appareil de commande (6, 7) considéré, par exemple conjointement avec l'indication de charger le fichier Bitmap transmis dans la mémoire d'écran.

20. Procédé selon l'une des revendications précédentes, **caractérisé par le fait que** le format de données de transmission lors de la communication entre les appareils de commande (6, 7) et le bloc fonctionnel d'interface (9) et/ou le module (17) exécutant cette fonction correspond à un protocole de données normalisé.

21. Procédé selon l'une des revendications précédentes, **caractérisé par le fait que**, sur les appareils de commande (6, 7), un programme destiné à l'affichage et/ou à l'évaluation rapide des données reçues est chargé en plus d'un système d'exploitation.

22. Dispositif (1 ; 2) pour la commande et/ou l'observation d'un dispositif (4) destiné à la surveillance d'au moins un appareil pilote (3) couplé à une installation par / sur au moins un appareil de commande (6, 7) distant et communiquant avec le dispositif de surveillance, dans lequel il est prévu dans le cadre du dispositif de surveillance (4) ou d'un appareil (17) raccordé à celui-ci un bloc fonctionnel supplémentaire (9) qui s'intègre à la manière d'un module d'interface dans la communication entre le dispositif de surveillance (4) ou un bloc fonctionnel de surveillance (8) d'une part et les appareils de commande (6, 7) raccordés d'autre part et qui évalue les informations adressées à un appareil de commande (6, 7) raccordé et les prépare de telle sorte que les informations alors retransmises peuvent être affichées directement par l'appareil de commande (6, 7) concerné comme le ferait un terminal, le bloc fonctionnel d'interface (9) comprenant une partie de gestion (10) pour la gestion des appareils de commande (6, 7) raccordés et une partie d'exécution (11) qui est appelée par la partie de gestion (10) et qui est alimentée avec les informations associées à un appareil de commande (6, 7) et qui prend alors en charge les étapes de calcul à exécuter en fait par celui-ci et qui fournit comme information de résultat notamment un fichier Bitmap pouvant être chargé dans une mémoire d'écran.

23. Dispositif selon la revendication 22, **caractérisé par le fait que** le bloc fonctionnel d'interface (9) comporte plusieurs canaux pour la communication (15, 16) avec plusieurs blocs fonctionnels de surveillance (8) et/ou dispositifs de surveillance (4, 13, 14).
